# EUROPÄISCHE PATENTSCHRIFT

(11) **EP 2 067 270 B1**
(45) Veröffentlichungstag und Bekanntmachung des Hinweises auf die Patenterteilung: **02.11.2011**
(21) Anmeldenummer: 07801356.2
(22) Anmeldetag: 20.09.2007
(51) Int. Cl.: H04B 3/54

(54) **ELEKTRISCHE SCHALTUNG**
ELECTRICAL CIRCUIT
CIRCUIT ÉLECTRIQUE

(30) Priorität: 29.09.2006 DE 102006046629
(43) Veröffentlichungstag der Anmeldung: 10.06.2009
(73) Patentinhaber: Plättner Elektronik GmbH, 38889 Blankenburg (DE)
(72) Erfinder: BLANK, Jürgen, 06507 Gernrode (DE); HILDEBRANDT, K.-Ulrich, 06507 Gernrode (DE); GÖDE, Lothar, 06507 Gernrode (DE); PLÄTTNER, Helmut, 06507 Gernrode (DE)
(74) Vertreter: Kagelmann, Manfred
(86) Internationale Anmeldenummer: PCT/DE2007/001695
(87) Internationale Veröffentlichungsnummer: WO 2008/040301

(56) Entgegenhaltungen:
- EP-A- 1 134 910
- EP-A- 1 271 799
- EP-B- 1 066 690

## Beschreibung

Die Erfindung betrifft eine elektrische Schaltung zur Steuerung von mehren elektrischen Verbrauchern und deren Funktionen.
Sie eignet sich besonders für die Nachrüstung von bereits in Bauwerken installierten elektrischen Schaltungen, wie z.B. von Lüftungsventilatoren und Beleuchtungsanlagen welche sich nicht ohne grundhafte bauliche Maßnahmen und Elektroinstallationsmaßnahmen einfach erweiten lassen .

Bekannt ist eine Schaltung zur Steuerung eines elektrischen Verbrauchers , wobei mittels eines Schalters einige wenige verschiedene Funktionen durch mehrmaliges Betätigen desselben, wie wiederholtes Ein/Aus- schalten, so realisiert werden, dass die Anzahl der Schaltintervalle
bzw. der Schaltimpulse am Endgerät bzw. dem Endverbraucher mittels einer Elektronik ausgewertet werden (Zum Beispiel die Schaltung eines Kronleuchters mit mehren Stromkreisen).
Nachteilig ist daran, dass der elektrische Verbraucher mit einer solchen Elektronik ausgerüstet sein muss und dass es nicht akzeptabel ist, z,B. fünf oder mehrmals zu schalten um den einen oder den anderen Zustand herbei zuführen.

Bekannt ist auch eine Schaltung bei welcher durch Modulation der Netzspannung zwischen Phase und Nullleiter verschiedene Frequenzen oder Pulslängenmodulationen oder durch eine zusätzliche Modulation in Phasennulllage verschiedene Schaltvorgänge realisierbar sind.
Nachteilig ist daran, dass am Schalter selbst immer Phase und Nullleiter vorhanden sein müssen, was bei bereits vorhandenen einfachen Ein/Aus- Schaltern in Wechselstromkreisen nicht der Fall ist.

Bekannt ist weiterhin eine Infrarotfernschaltung zur Fernsteuerung von elektrischen Verbrauchern.
Nachteilig ist daran, dass einerseits zunächst ein relativ aufwendiges internes oder externes Empfangsteil am Endgerät bzw. am Endverbraucher installiert sein muss und andererseits ein Sendeteil mit separater Stromversorgung mittels einer Batterie erforderlich ist.

Bekannt ist weiterhin eine drahtgebundene elektrische Schaltung zur Steuerung von mehreren Funktionen eines elektrischen Verbrauchers und dessen Funktionen innerhalb eines Niederspannungsnetzstromkreises mit Phase und Nullleiter, wobei zur Steuerung eines elektrischen Verbrauchers in der Phase eine Schaltbaugruppe mit mehreren Funktionstasten mit einem oder mehreren elektrischen Verbrauchern in Reihe geschaltet sind, wobei den elektrischen Verbrauchern jeweils eine weitere Schaltungsbaugruppe vorgeschaltet ist.
Nachteilig ist daran, dass zur Ansteuerung der Dioden für eine Modulation immer Phase und Nullleiter vorhanden sein oder diese vorgehalten werden müssen. Dies wiederum erfordert z.B. bei der Installation solcher Schaltungen oder insbesondere bei der Nachrüstung bereits vorhandener Netzschaltungen in Wohn-, Geschäfts- oder Gesellschaftsräumen einen erheblichen Aufwand für die Verlegung des Nullleiters. Außerdem ist die Reaktionszeit dieser Schaltung relativ lang. Bei minimalem Störspannungsabstand können sich dabei Sicherheitsprobleme ergeben und Übertragungsstörungen durch allgemeine Netzstörungen einstellen. Reichlich bemessener Störspannungsabstand kann z.B. bei so geschalteten Lichtanlagen zu Flackererscheinungen führen (EP 1 066 690 B1).

Bekannt ist weiterhin ein System zur Nulldurchgangs-Datenübertragung für Versorgungsleitungen .

Nachteilig ist daran, dass diese Schaltungen durchgehend Phase und Nullleiter erfordern, was bei einigen speziellen Anwendungszwecken z.B. dort wo einfache Ein-Aus-Schaltungen vorhanden sind, die auf Unterbrechung der Phase beruhen und bei denen kein Nullleiter vorhanden ist, nicht realisierbar ist (EP 1 134 910 A2).

Bekannt ist weiterhin ein Burstsignalübertragungssystem zur Realisierung von elektrischen Schaltungen.
Nachteilig ist daran, das die in der Schaltung integrierten Transmitter zur Funktionsfähigkeit der Schaltung immer eine EMK über Phase und Nullleiter oder Batterie benötigen (EP 0 370 943 A2).

Bekannt ist weiterhin ein drahtgebundenes Lampensteuerungssystem mit Signalübertragung durch Änderung der Versorgungsspannung.
Nachteilig ist auch dabei, dass der Signalmodulierende Stromkreis an Phase und Nullleiter angeschlossen ist und das System deshalb nicht für Schaltungen ohne Nullleiter geeignet ist (WO 91/030093 A1).

Bekannt ist schließlich noch ein weiteres Verbrauchersteuerungssystem mit drahtgebundener Signalisierung.
Nachteilig ist auch daran, dass für die Signalmodulation dieses Systems immer Phase und Nullleiter erforderlich sind, weshalb auch dieses System nicht für Schaltungen ohne Nullleiter geeignet ist (GB 2 050 662 A).

Aufgabe der Erfindung ist es, eine drahtgebundene Schaltung zur Steuerung mehrerer verschiedener elektrischer Verbraucher und/oder zur Steuerung mehrerer unterschiedlicher Funktionen derselben in einem einzigen Wechselstromkreis zu schaffen.

Dabei soll die Bedieneinheit zur Wahl der Funktionen allein in der spannungsbeaufschlagten Phase eingeordnet sein , wobei zur Funktion der Bedieneinheit keine zusätzliche EMK durch Batterie oder Trafo vorhanden sein muss und auch kein Nullleiter anliegen muss.

Erfindungsgemäß wird die Aufgabe wie mit den angegebenen Ansprüche gelöst.
In einem Wechselstromkreis mit einer ersten Phase (26b) und einem Nullleiter (26a)zur Steuerung mindestens eines elektrischen ersten Verbrauchers (28), ist in der ersten Phase(26b) mindestens eine Modulationsschaltbaugruppe(21) mit mehreren Funktionstasten (12, 13, 14, 15, 16, 17) über Klemmen, wie erste Klemme A und zweite Klemme B mit einem oder mehreren elektrischen Verbrauchern(28, 28a) in Reihe geschaltet, wobei den elektrischen Verbrauchern eine Demodulationsschaltbaugruppe 22 vorgeschaltet ist.

Die Modulationsschaltbaugruppe(21) mit erster und zweiter Klemme(A und B) sowie mit mindestens zwei Funktionstasten (12, 13, 14, 15, 16, 17)ist so gestaltet, dass
a) innerhalb derselben zwischen der ersten Phase (26b), an der Klemme (A) anliegend und einer modulierbaren zweiten Phase(26c), an der Klemme (B) anliegend, eine Diode (3) befindlich ist, wobei deren Kathode an der ersten Phase (26b) anliegt und deren Anode an der modulierbaren zweiten Phase (26c) anliegt und
b) parallel dazu, zwischen der ersten Phase (26b) und der modulierbaren zweiten Phase (26c) mehrere in Reihe geschaltete und gleich gepolte Dioden als erste Diodengruppe (1) und als zweite Diodengruppe (2) befindlich sind, wobei diese gegensätzlich zu der Diode 3 gepolt sind und
c) parallel dazu zwischen der ersten Diodengruppe (1) und der zweiten Diodengruppe (2) sowie der modulierbaren zweiten Phase (26c) ein Feldeffekttransistor (4) befindlich ist, welcher andererseits über eine zweite Leitung (29) mit Klemmen (C) von Doppeldioden der Funktionstasten (12, 13, 14, 15, 16, 17) sowie einem Codegeber (8) an dessen Start-Stopp Klemme(PIN014) so zusammengeschaltet ist, dass der Feldeffekttransistor (4) der zweiten Diodengruppe (2) parallel geschaltet ist und wobei die Source an der letzten Kathode der Diodengruppe (2) anliegt, Drain an deren Anode anliegt und Gate an den Funktionstasten (12 bis 17) über deren Dioden mit Klemme C zur Entkopplung angeschlossen ist und
d) zwischen der ersten Phase (26b) und der modulierbaren zweiten Phase (26c) ein Modulationsfeldeffekttransistor (5) befindlich ist, welcher andererseits über eine erste Leitung (11) mit dem Codegeber (8) an dessen Codegeberausgang Klemme (PIN 011) so zusammengeschaltet ist, dass der Modulationsfeldeffekttransistor (5) den ersten und zweiten Diodengruppen (1 und 2) parallel geschaltet ist, wobei Source an der letzten Kathode der Diodengruppe (2) anliegt und Drain an der Anode von Diodengruppe (1) anliegt und Gate mit dem Datenausgang des Codegebers (8) an einer dessen Code-Ausgangs-Klemmen (PIN 011) verbunden ist und
e) in der ersten Phase (26b) eine Gleichrichterdiode (6) befindlich ist, wobei die Kathode derselben mit einer Versorgungsspannungsleitung (32) für den Codegeber (8) zusammen geschaltet ist und
f) zwischen der Versorgungsspannungsleitung (32) für den Codegeber 8 und der modulierbaren zweiten Phase (26c), ein Kondensator (7) befindlich ist und
g) die Versorgungsspannungsleitung (32) mit dem Codegeber (8) an deren positiver Versorgungsspannungs-Klemme (PIN 010) zusammen geschaltet ist und
h) die modulierbare zweite Phase (26c) mit den Funktionstasten (12, 13, 14, 15, 16, 17) und über eine dritte Leitung (31) mit dem Codegeber (8) an dessen negativer Versorgungsspannungs-Klemme (PIN 09) zusammen geschaltet ist und wobei
i) jede der Doppeldioden der Funktionstasten (12, 13, 14, 15, 16, 17) mit ihren Klemmen(D) über Leitungen mit dem Codegeber (8) an mindestens zwei oder mehrerer Steuerungseingangs-Klemmen (PIN 06, 07, 08, 016, 017,018) zusammengeschaltet sind und wobei
j) die Versorgungsspannungsleitung (32) an die positive Versorgungsspannungs- Klemme (PIN 010) und die Start-Stop Klemme (PIN 014) des Codegebers (8) über einen Pull up Widerstand (9) zusammengeschaltet ist und mit der zweiten Leitung (29) an der Start-Stopp Klemme (PIN 014) des Codegebers (8) angeschlossen ist und wobei
k) externe Oszillatoranschluss-Klemmen (PIN 012 und 013) des Codegebers (8) über einen externen Oszillatorwiderstand (10) zusammengeschaltet sind und wobei
l) die den elektrischen Verbrauchern (28, 28a) vorgeschaltete Demodulationsschaltbaugruppe (22) mit einem Netzteil (23) zur Aufrechterhaltung eines minimalen Stromes für die Stand by Funktion versehen ist und mit dem Nullleiter(26a) und der modulierbaren zweiten Phase (26c) aus der zweiten Klemme (B) der Modulationsschaltbaugruppe(21) zusammengeschaltet ist und wobei
m) innerhalb der Demodulationsschaltbaugruppe (22) dem Netzteil (23) ein elektronischer Decoder (24) als Mikroprozessor nachgeschaltet ist, welcher auch direkt mit dem Nullleiter (26a) und mit der modulierbaren zweiten Phase (26c) über einen Hochpassfilter(25) und/oder über eine "Nulldurchgang" Erkennung (30) mit der Modulationsschaltbaugruppe (21) an deren Klemme (B) anliegend, zusammen geschaltet ist und wobei
n) dem Decoder (24) mindestens ein elektronischer oder elektromechanischer Leistungsschalter (27, 27a) nachgeordnet ist, welcher wiederum direkt mit dem Nullleiter (26a) und der modulierbaren zweiten Phase (26c) parallel zusammen geschaltet ist, wobei über die erste und zweite Klemme (E und F) und/oder der dritten und vierten Klemme(G und H) der Leistungsschalter (27, 27a) mit den elektrischen Endverbrauchern (28, 28a) verbunden ist oder sind.

Es können auch mehrere Modulationsschaltbaugruppen(21) in Reihe zusammen geschaltet sein.

Die Vorzüge der Erfindung bestehen darin, dass sich mit relativ geringem Aufwand für einen einfachen Wechselstromkreis mit in Reihe geschalteten Ein/Aus- Schalter oder Wechselschaltern zum elektrischen Verbraucher, verschiedene weitere Verbraucher und/oder verschiedene weitere Funktionen komfortabel schalten lassen. Technischer Aufwand für Material und Arbeit lässt sich so wesentlich minimieren. Die Polklemmen A und B der Phasen sind gegeneinander austauschbar bzw. verwechselbar, ohne dem System der elektrischen Schaltung zu schaden, was die Installationsarbeiten wesentlich erleichtert. Besonders in bereits vorhandenen elektrischen Gebdudeinstallationen lässt sich die erfindungsgemäße Schaltung leicht integrieren, indem das gesamte einfache Leitungsnetz unverändert im Bauwerk verbleibt und lediglich die Ein/aus- Schalter oder die Wechselschalter gegen solche gleicher Bemessung mit den erfindungsgemäßen
Modulationsschaltbaugruppen ausgestatten werden und auch Deckenlüfter und/oder Beleuchtungsanlagen mit einer solchen
Demodulationsschaltbaugruppe ausgerüstet werden. Dies ist z.B. bei nachträglicher Installation eines Deckenlüfters mit integriertem Leuchtmitteln vorteilhaft, weil sich so die Leuchtmittel in verschiedenen Helligkeitsstufen und/oder in verschiedener Anzahl schalten oder dimmen lassen und/oder der Deckenlüfter gleichzeitig oder separat ein oder ausschaltbar ist und auch in verschiedenen Leistungsstufen oder Drehrichtungen betreibbar ist. Es lassen sich so auch mehrere erfindungsgemäße Schaltbaugruppen zusammenschalten. Die Realisierung einer Modulation von Bursts auf den Halbwellen der Amplituden gewährleistet eine große Unempfindlichkeit gegen allgemeine Netzstörungen und gegen Funktionsstörungen anderer Art, wie z. B. Flackern von Licht. Die erfindungsgemäße Schaltung weist außerordentlich kurze Reaktionszeiten auf.

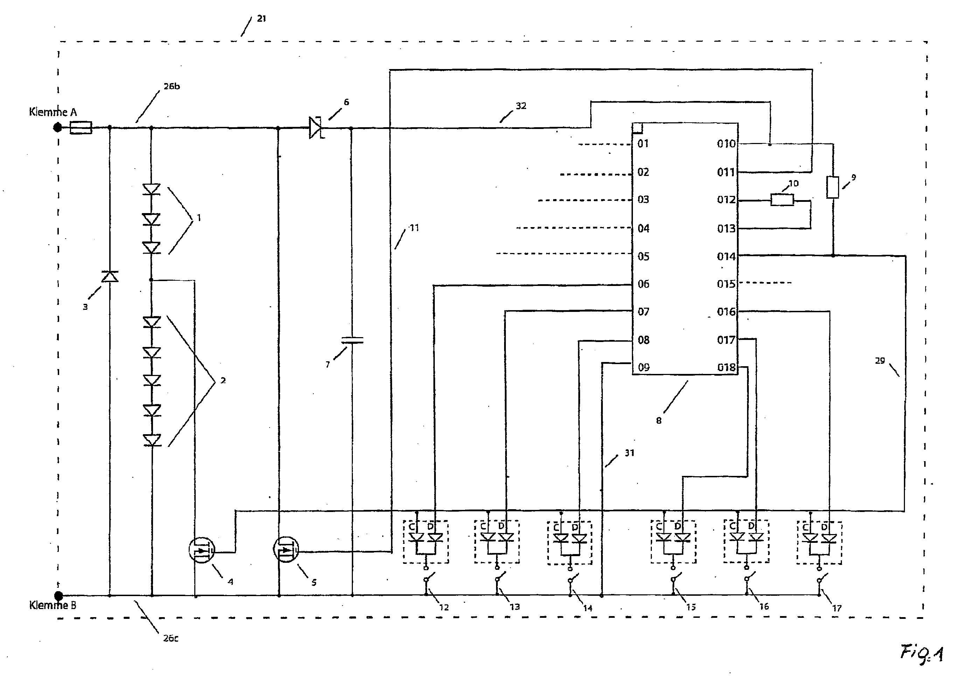

Nachstehend wird die Erfindung an einem Ausführungsbeispiel für die Installation mit zwei elektrischen Verbrauchern wie Deckenlüfter und Beleuchtungsanlage erläutert.
In der zugehörigen Zeichnung ist mit
Fig. 1 ein Schaltbild für die Modulationsschaltbaugruppe 21 des Funktionstasters und mit

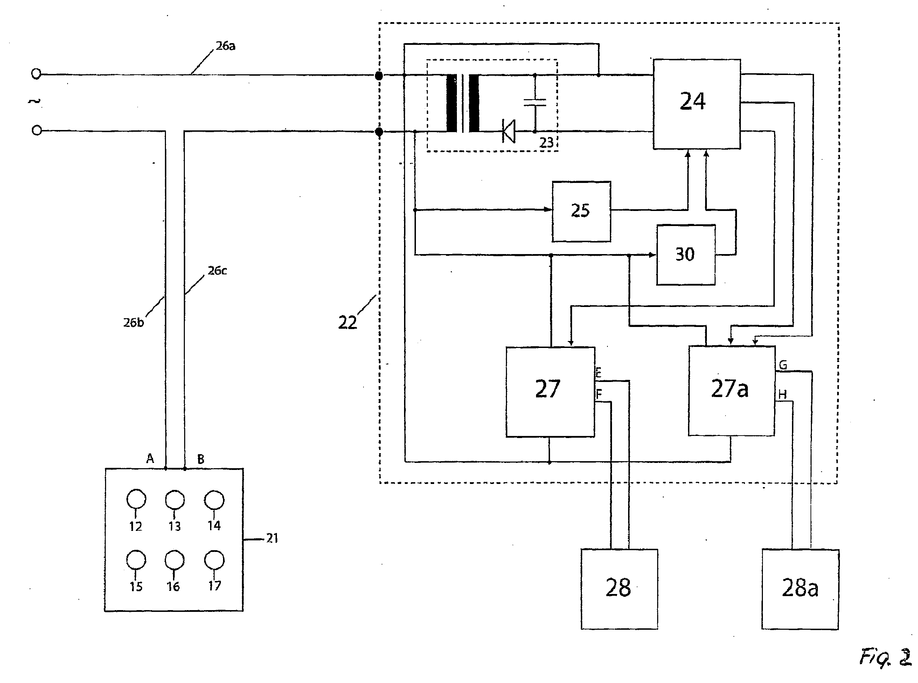

Fig. 2 ein Schaltbild einer integrierten Demodulationsschaltbaugruppe mit Funktionstaster als Blockschaubild und mit

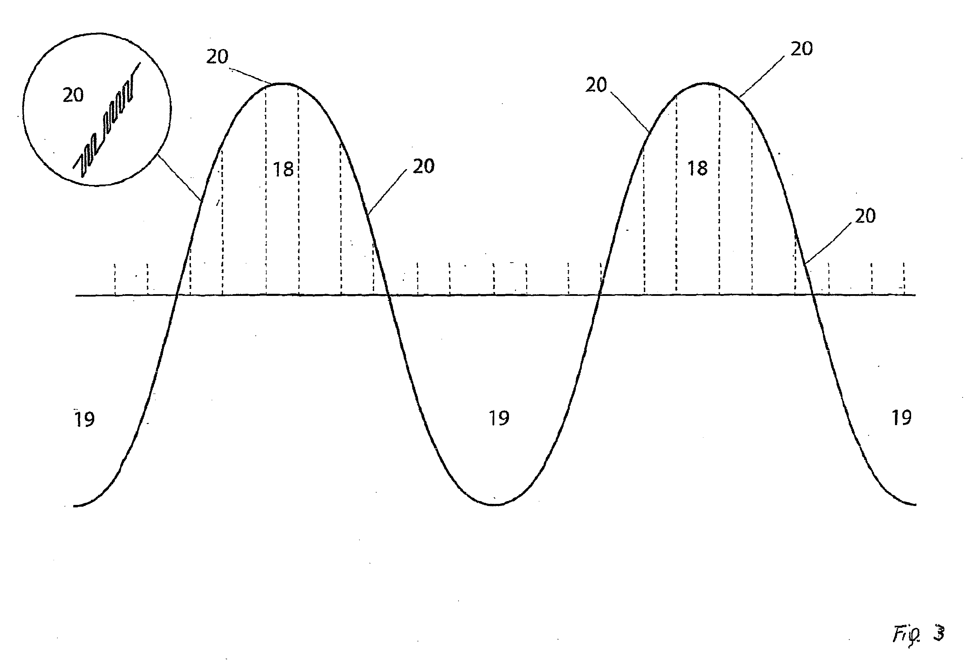

Fig. 3 eine Modulationskurve mit Burst's für die Schaltimpulse schematisch dargestellt.

Ein mit Lampen kombinierter Deckenlüfter soll mittels einer einfachen im Bauwerk bereits vorhandenen Unterputz-Elektroinstallation mit Phase und Nullleiter am Netz angeschlossen werden. Zwischen dem Deckenlüfter als einem elektrischen Verbraucher 28 sowie der Lampe 28a und Netz ist zunächst die erfindungsgemäße Modulationsschaltbaugruppe 21 mit den Funktionstasten 12 bis 17 an Stelle eines ursprünglich als Ein-Aus-Schalter konzipierten Schalters in der Phase in Reihe geschaltet. Zur Steuerung mehrerer unterschiedlicher Funktionen wie Ein/Aus und unterschiedliche Deckenlüfterdrehzahlen und/oder unterschiedliche Beleuchtungsstärken der Lampe und/oder die Schaltung einer unterschiedlichen Anzahl von Lampen sind die entsprechend zugeordneten Funktionstasten betätigbar. Dazu ist der mit einer Lampe kombinierte Deckenlüfter mit der Demodulationsschaltbaugruppe 22 ausgerüstet und am vorhandenen 2-adrigem Netz angeschlossen.
In Funktion der Schaltung können damit elektrische Leistungen von 1 Watt für Stand by Betrieb bis mehren hundert Watt geschaltet werden. Im Reihenstromkreis ergeben sich Ströme von ca. 1m Ampere' bis mehren Ampere'. Dabei wird während einer Halbwelle über die Diodengruppe 1 ein geringer Spannungsabfall bewirkt, der zur Versorgung des Codegebers 8 sowie zur Durchsteuerung des Feldeffekttransistors 4, der die Diodengruppe 2 elektrisch überbrückt, dient. Die Diode 6 und der Kondensator 7 dienen dabei zur Auskopplung und Energiepufferung. Die Diode 3 lässt die entgegengesetzte Halbwelle passieren.
Mit Bild 3 ist die Modulation des Wechselstromes während einer Signalübertragung graphisch dargestellt.

Zur Übertragung eines Funktionssteuerbefehls vom Funktionstastenschalter d.h. der Modulationsschaltbaugruppe 21 zu den Verbrauchern 28 und 28a wird eine Funktionstaste oder es werden mehrere Funktionstasten 12 bis 17 betätigt. Die jeweils zugeordnete Doppeldiode zieht dabei die Gate-Spannung an Feldeffekttransistor 4 über den Widerstand 9 nach unten womit Feldeffekttransistor 4 öffnet. Gleichzeitig schwingt die Taktzentrale des Codegebers 8 (Klemme PIN 014) an, wobei die Frequenz des Grundtaktes von der Größe des externen Oszillatorwiderstandes 10 bestimmt wird. Über die Doppeldiode (Klemme D) einer jeweils betätigten Funktionstaste 12 bis 17 erhält der Codegeber 8 die Information darüber, welche Taste oder welche Tasten betätigt wurden. Dabei steuern die generierten Codediagramme von der Ausgangs-Klemme 011 des Codegebers 8 das Gate des Feldeffekttransistors 5, welcher rhythmisch zum Code-Signal die Dioden der Diodengruppe 1 und die der Diodengruppe 2 elektrisch überbrückt. Nach dem Steuervorgang werden diese Dioden der Diodengruppe 2 vom Feldeffekttransistor 4 überbrückt, um die Verlustleistung möglichst klein zu halten . Andererseits werden die Dioden der Diodengruppe 2 benötigt um den Modulationsgrad bzw. um das Stör- Nutzspannungsverhältnis erforderlichen Falls zu erhöhen. Am Codegeber 8, Klemme PIN 11 erscheinen Codediagramme , die der jeweils betätigten Funktionstaste 12 bis 17 entsprechen. Das optimale zeitliche Zusammenspiel zwischen Frequenz des Hauptstromkreises, der Codelänge und der Synchronlücke zwischen den Modulationsburst's 20 ist in der oberen Halbwelle in Bild 3 dargestellt. Die untere Halbwelle wird dabei in der Regel nicht moduliert und von Diode 3 unbeeinflusst durchgelassen.
Um die modulierte Halbwelle in der Demodulationsschaltbaugruppe 22 zu demodulieren, wird das Code-Signal über das Hochpassfilter 25 von dem niederfrequenteren Wechselstrom abgespalten und dem elektronischen Decoder 24 zugeführt.

Dabei werden unvollständige und fehlerhafte Modulationsburst's 20 vom Decoder 24 ignoriert. Zur Erhöhung der Funktionssicherheit erfolgen mehrere Modulationsburst's 20 nacheinander Der Decoder 24 wertet dann einige vollständig übertragene Modulationsburst's 20 aus und überprüft diese auf Gleichheit. Die elektronischen Leistungsschalter 27, 27a schalten und/oder dimmen die einzelnen Verbraucher 28, 28a, wobei die Nulldurchgangserkennung 30 zur Dimmung dient.

Aufstellung der verwendeten Bezugzeichen
1 erste Diodengruppe 1 einer Reihenschaltung mehrerer schneller Dioden
2 zweite Diodengruppe 2 einer Reihenschaltung mehrerer schneller Dioden
3 Diode
4 Feldeffekttransistor
5 Modulationsfeldeffekttransistor
6 Gleichrichterdiode
7 Kondensator
8 Codegeber
9 Pull up Widerstand
10 externer Oszillatorwiderstand
11 erste Leitung
12 bis 17 Funktionstaste
18 positive Halbwelle des Wechselstromes
19 negative Halbwelle des Wechselstromes
20 Modulationsburst
21 Modulationsschaltbaugruppe (z.B. Wandschalter)
22 Demodulationsschaltbaugruppe
23 Netzteil (Stand by)
24 Decoder (Mikroprozessor)
25 Hochpassfilter
26a Nullleiter
26b erste Phase
26c modulierbare zweite Phase
27 erster Leistungsschalter
27a zweiter Leistungsschalter
28 erster Verbraucher
28a zweiter Verbraucher
29 zweite Leitung
30 "Nulldurchgang" Erkennung
31 dritte Leitung
32 Versorgungsspannungsleitung für Codegeber 8

A erste Klemme an Modulationsschaltbaugruppe 21
B zweite Klemme an Modulationsschaltbaugruppe 21
C erste bis sechste Klemme an Doppeldioden der Funktionstaster 12 bis 17
D siebente bis zwölfte Klemme an Doppeldioden der Funktionstaster 12 bis 17
E erste Klemme an ersten Leistungsschalter 27
F zweite Klemme an ersten Leistungsschalter 27
G dritte Klemme an zweiten Leistungsschalter 27a
H vierte Klemme an zweiten Leistungsschalter 27 a

01 bis 018 PIN Klemmen an Codegeber 8

## Patentansprüche

1. Drahtgebundene elektrische Schaltung zur Steuerung von mehreren Funktionen eines elektrischen Verbrauchers und/oder von mehreren elektrischen Verbrauchern und deren Funktionen innerhalb eines Niederspannungsnetzstromkreises mit Phase und Nullleiter oder eines einfachen Wechselstromkreises wobei
in einem Wechselstromkreis mit einer ersten Phase (26b) und einem Nullleiter (26a) zur Steuerung mindestens eines ersten elektrischen Verbrauchers (28) in der ersten Phase (26b) mindestens eine Modulationsschaltbaugruppe (21) mit mehreren Funktionstasten (12, 13, 14, 15, 16, 17) über eine erste Klemme (A) und eine zweite Klemme (B) mit einem oder mehreren elektrischen Verbrauchern , wie einem ersten elektrischen Verbraucher(28) und einem zweiten elektrischen Verbraucher (28a) in Reihe geschaltet sind und wobei den elektrischen Verbrauchern (28, 28a) eine Demodulationsschaltbaugruppe (22) vorgeschaltet ist und wobei die Modulationsschaltbaugruppe (21) mit einer ersten Klemme (A) und einer zweiten Klemme(B) sowie mit mindestens zwei Funktionstasten (12, 13, 14, 15, 16, 17) so gestaltet ist, dass
a) innerhalb derselben zwischen der ersten Phase (26b), an der ersten Klemme (A) anliegend und einer modulierbaren zweiten Phase(26c), an der zweiten Klemme (B) anliegend, eine Diode (3) befindlich ist, wobei deren Kathode an der ersten Phase (26b) anliegt und deren Anode an der modulierbaren zweiten Phase(26c) anliegt und
b) parallel dazu, zwischen der ersten Phase (26b) und der modulierbaren zweiten Phase (26c) mehrere in Reihe geschaltete und gleich gepolte Dioden als erste Diodengruppe (1) und als zweite Diodengruppe (2) befindlich sind, wobei diese gegensätzlich zu der Diode(3) gepolt sind und
c) parallel dazu zwischen der ersten Diodengruppe (1) und der zweiten Diodengruppe (2) sowie der modulierbaren zweiten Phase (26c) ein Feldeffekttransistor (4) befindlich ist, welcher andererseits über eine zweite Leitung (29) mit ersten bis sechsten Klemmen (C) von Doppeldioden der Funktionstasten (12, 13, 14, 15, 16, 17) sowie einem Codegeber (8) an dessen Start-Stopp Klemme(PIN014) so zusammengeschaltet ist, dass der Feldeffekttransistor (4) der zweiten Diodengruppe (2) parallel geschaltet ist und wobei die Source an der letzten Kathode der zweiten Diodengruppe (2) anliegt, Drain an deren Anode anliegt und Gate an den Funktionstasten (12 bis 17) über deren Dioden mit erster bis sechster Klemme (C) zur Entkopplung angeschlossen ist und
d) zwischen der ersten Phase (26b) und der modulierbaren zweiten Phase (26c) ein Modulationsfeldeffekttransistor (5) befindlich ist, welcher andererseits über eine erste Leitung (11) mit dem Codegeber (8) an dessen Codegeberausgang Klemme (PIN 011) so zusammengeschaltet ist, dass der Modulationsfeldeffekttransistor (5) der ersten Diodengruppe (1) und der zweiten Diodengruppe(2) parallel geschaltet ist, wobei Source an der letzten Kathode der zweiten Diodengruppe (2) anliegt und Drain an der Anode von Diodengruppe (1) anliegt und Gate mit dem Datenausgang des Codegebers (8) an einer dessen Code-Ausgangs-Klemmen (PIN 011) verbunden ist und
e) in der ersten Phase (26b) eine Gleichrichterdiode (6) befindlich ist, wobei die Kathode derselben mit einer Versorgungsspannungsleitung (32) für den Codegeber (8) zusammen geschaltet ist und
f) zwischen der Versorgungsspannungsleitung (32) für den Codegeber(8) und der modulierbaren zweiten Phase (26c), ein Kondensator (7) befindlich ist und
g) die Versorgungsspannungsleitung (32) mit dem Codegeber (8) an deren positiver Versorgungsspannungs-Klemme (PIN 010) zusammen geschaltet ist und
h) die modulierbare zweite Phase (26c) mit den Funktionstasten (12, 13, 14, 15, 16, 17) und über eine dritte Leitung (31) mit dem Codegeber (8) an dessen negativer Versorgungsspannungs-Klemme (PIN 09) zusammen geschaltet ist und wobei
i) jede der Doppeldioden der Funktionstasten (12, 13, 14, 15, 16, 17) mit ihren siebenten bis zwölften Klemmen(D) über Leitungen mit dem Codegeber (8) an mindestens zwei oder mehrerer dessen Steuerungseingangs-Klemmen (PIN 06, 07, 08, 016, 017, 018) zusammengeschaltet sind und wobei
j) die Versorgungsspannungsleitung (32) an die positive Versorgungsspannungs- Klemme (PIN 010) und die Start-Stop Klemme (PIN 014) des Codegebers (8) über einen Pull up Widerstand (9) zusammengeschaltet ist und mit der zweiten Leitung (29) an der Start-Stopp Klemme (PIN 014) des Codegebers (8) angeschlossen ist und wobei
k) externe Oszillatoranschluss-Klemmen (PIN 012 und 013) des Codegebers (8) über einen externen Oszillatorwiderstand (10) zusammengeschaltet sind und wobei
l) die den elektrischen Verbrauchern (28, 28a), vorgeschaltete Demodulationsschaltbaugruppe (22) mit einem Netzteil (23) zur Aufrechterhaltung eines minimalen Stromes für die Stand by Funktion versehen ist und mit dem Nullleiter(26a) und der modulierbaren zweiten Phase (26c) aus der Zweiten Klemme (B) der Modulationsschaltbaugruppe(21) zusammengeschaltet ist und wobei
m) innerhalb der Demodulationsschaltbaugruppe (22) dem Netzteil (23) ein elektronischer Decoder (24) als Mikroprozessor nachgeschaltet ist, welcher auch direkt mit dem Nullleiter (26a) und mit der modulierbaren zweiten Phase (26c) über einen Hochpassfilter(25) und/oder über eine "Nulldurchgang" Erkennung (30) mit der Modulationsschaltbaugruppe (21) an deren Klemme (B) anliegend, zusammen geschaltet ist und wobei
n) dem Decoder (24) mindestens ein elektronischer oder elektromechanischer Leistungsschalter (27, 27a) nachgeordnet ist, welcher wiederum direkt mit dem Nullleiter (26a) und der modulierbaren zweiten Phase (26c) parallel zusammen geschaltet ist, wobei über die Klemmen (E, F und/oder G, H) der Leistungsschalter (27, 27a) mit den elektrischen Endverbrauchern (28, 28a) verbunden ist oder sind.

2. Elektrische Schaltung nach Anspruch 1, **dadurch gekennzeichnet, dass** mehrere Modulationsschaltbaugruppen(21) in Reihe zusammen geschaltet sind.

## Claims

1. Wire-bound electric circuit for control of several functions of one electric consumer and/or a number of electric consumers and their functions within one low-voltage network circuit with phase and neutral conductor or one simple AC circuit where
in an AC circuit with a first phase (26b) and a neutral conductor (26a) for control of at least one first electrical consumer (28) in the first phase (26b) at least one modulation circuit module (21) with a number of function keys (12, 13, 14, 15, 16, 17) is provided through one first terminal (A) and one second terminal (B) with one or a number of electrical consumers, like one first electrical consumer (28) and one second electrical consumer (28a) in series connection, and where the electrical consumers (28, 28a) have a demodulation circuit module (22) connected on upstream side, and where the modulation circuit module (21) is provided with one first terminal (A) and one second terminal (B) and with at least two function keys (12, 13, 14, 15, 16, 17) such that
a) within the same one diode (3) is installed between the first phase (26b) connected to the first terminal (A) and one second phase (26c) capable of modulation and connected to the second terminal (B), where the cathode of diode is connected to the first phase (26b) and the anode is connected to the second phase capable of modulation (26c), and where
b) in parallel to that, between the first phase (26b) and the second phase capable of modulation (26c) a number of series-connected and equally-poled diodes is provided as first group of diodes (1) and second group of diodes (2), with the same poled in opposite sense relative to diode (3), and
c) in parallel to that, one field effect transistor (4) is provided in parallel between the first group of diodes (1) and the second group of diodes (2) and the second phase capable of modulation (26c) that, on the other hand, is interconnected via a second line (29) with the first up to the sixth terminal (C) of double diodes of the function keys (12, 13, 14, 15, 16, 17) and encoder (8) with interconnection at its start-stop terminal (PIN 014) such that the field effect transistor (4) of the second group of diodes (2) is connected in parallel, with the source applied to the last cathode of the second group of diodes (2), the drain applied to its anode and the gate connected to the function keys (12 through 17) via their diodes with first up to sixth terminal (C) for decoupling, and
d) a modulation field effect transistor (5) is provided between the first phase (26b) and the second phase capable of modulation (24c) which, on the other hand, is interconnected with the encoder (8) through a first line (11) through connection to the encoder output terminal (PIN 011) such that the modulation field effect transistor (5) of the first group of diodes (1) and the second group of diodes (2) are connected in parallel, with the source applied to the last cathode of the second group of diodes (2) and the drain applied to the anode of the group of diodes (1) and the gate connected to the data output of encoder (8) and to one of its code output terminals (PIN 011), and
e) a rectifier diode (6) is provided in a first phase (26b), with its cathode interconnected with a supply voltage line (32) for the encoder (8), and
f) a capacitor (7) is provided between the supply voltage line (32) for the encoder (8) and the second phase capable of modulation (26c), and
g) the supply voltage line (32) with the encoder (8) interconnected with its positive supply voltage terminal (PIN 010), and
h) the second phase capable of modulation (26c) with the function keys (12, 13, 14, 15, 16, 17) interconnected through a third line (31) to the encoder 8 to its negative supply voltage terminal (PIN 09), and where
i) each of the dual diodes of function keys (12, 13, 14, 15, 16. 17) are interconnected with their 7^{th} to 12^{th} terminals (D) via lines going to the encoder (8) and connected to at least two or more of its control input terminals (PIN 06, 07. 08, 016, 017, 018), and where
j) the supply voltage line (32) is connected to the positive supply voltage terminal (PIN 010) and the start/stop terminal (PIN 014) of the encoder (8) interconnected through a pull-up resistor (9), and with the second line (29) connected to the start-stop terminal (PIN 014) of the encoder (8), and where
k) the external oscillator connection terminals (PIN 012 and PIN 013) of the encoder (8) are interconnected through an external oscillator resistor (10), and where
l) the demodulation circuit module (22) on upstream side of electric consumers (28, 28a) is provided with a power supply unit (23) for maintenance of minimum power supply for stand-by function, and interconnected with the neutral conductor (26a) and the second phase capable of modulation (26c) from the second terminal (B) of modulation circuit module (21), and where
m) within the demodulation circuit module (22) an electronic decoder (24) as microprocessor is connected to the downstream side of power supply unit (23), which is even directly interconnected with the neutral conductor (26a) and with the second phase capable of modulation (26c) applied through a high-pass filter (25) and/or a "zero passage" recognition unit (30), with the modulation circuit module (21) applied to its terminal (B), and where
n) the decoder (24) has at least one electronic or electromechanical power switch (27, 27a) connected to its downstream side which, in its turn, is directly connected in parallel to the neutral conductor (26a) and the second phase capable of modulation (26c), and where the power switch (27, 27a) is through the terminals (E, F and/or G, H) connected to the electric final consumers (28, 28a).

2. Electric circuitry according to claim 1, **characterized by** the fact that a number of modulation circuit modules (21) are connected in series.

## Revendications

1. Circuit électrique câblé pour la commande de plusieurs fonctions d'un utilisateur électrique et/ou de plusieurs utilisateurs électriques et de leurs fonctions à l'intérieur d'un réseau basse tension avec phase et conducteur neutre ou d'un circuit simple à courant alternatif, où
dans un circuit à courant alternatif avec une première phase (26b) et un conducteur neutre (26a) pour la commande d'au moins un premier utilisateur électrique (28), dans la première phase (26b) au moins un bloc de commutation à modulation (21) avec plusieurs touches de commande (12, 13, 14, 15, 16, 17) est connecté en série par une première borne (A) et une deuxième borne (B) avec un ou plusieurs utilisateurs électriques, lesquels sont un premier utilisateur électrique (28) et un deuxième utilisateur électrique (28a), et où en amont des utilisateurs électriques (28, 28a) il est inséré un bloc de commutation à démodulation (22), et où le bloc de commutation à modulation (21) avec une première borne (A) et une deuxième borne (B) et avec au moins deux touches de commande ((12, 13, 14, 15, 16, 17) est façonné de manière que
a) à l'intérieur du bloc, il y a, entre la première phase (26b) sur la première borne (A) et une deuxième phase modulable (26c) sur la deuxième borne (B), une diode (3), dont la cathode se trouve à la première phase (26b) et l'anode se trouve à la deuxième phase modulable (26c), et
b) parallèlement avec cela, entre la première phase (26b) et la deuxième phase modulable (26c) il y a plusieurs diodes connectées en série et de même polarité, formant le premier groupe de diodes (1), et un deuxième groupe de diodes (2), ayant une polarité contraire à la diode (3), et
c) parallèlement avec cela, entre le premier groupe de diodes (1) et le deuxième groupe de diodes (2) ainsi que la deuxième phase modulable (26c), il existe un transistor à effet de champ (4) qui, de son côté, est connecté par une deuxième ligne (29) sur des bornes, portant les numéros 1 - 6 (C), avec de diodes doubles des touches de commande (12, 13, 14, 15, 16, 17) et avec un générateur de code (8) sur sa borne marche-arrêt (stop-start) (PIN014), tous ensemble interconnectés en formant un circuit où le transistor à effet de champ (4) est connecté en parallèle au deuxième groupe de diodes (2), et la Source se trouve sur la dernière cathode du deuxième groupe de diodes (2), Drain se trouve sur son anode, et Gate est connecté par leurs diodes sur les bornes 1 - 6 (C) pour découplage, et
d) entre la première phase (26b) et la deuxième phase modulable (26c) il y un transistor à effet de champ à modulation (5) qui est connecté par une première ligne (11) avec le générateur de code (8) par la borne de sortie (PIN 011) de ce générateur, formant un circuit, dans lequel le transistor à effet de champ à modulation (5) du premier groupe de diodes (1) et du deuxième groupe de diodes (2) se trouvent en parallèle, où Source est branchée sur la dernière cathode du deuxième groupe de diodes (2), et Drain est branché sur l'anode du premier groupe de diodes (1), et Gate est lié à la sortie de données du générateur de code (8) par une des bornes de sortie (PIN 011), et
e) dans la première phase (26b) se trouve une diode de redressement (6), dont la cathode est liée avec une ligne d'alimentation en tension (32) du générateur de code (8), et
f) entre la ligne d'alimentation en tension (32) du générateur de code (8) et la deuxième phase modulable (26c) se trouve un condensateur (7), et
g) la ligne d'alimentation en tension (32) est liée avec le générateur de code (8) par la borne positive d'alimentation en tension (PIN 010), et
h) la deuxième phase modulable (26c) avec les touches de commande (12, 13, 14, 15, 16, 17) et par une troisième ligne (31) est liée avec le générateur de code (8) par la borne négative d'alimentation en tension (PIN 09), et
i) chacune des diodes doubles des touches de commande (12, 13, 14, 15, 16, 17) est liée par leurs septième jusqu'à la douzième bornes (D) par des lignes avec le générateur de code (8) sur, au moins, deux ou plusieurs bornes d'entrée de commande (PIN 06, 07, 08, 016, 017, 018), et
j) la ligne d'alimentation en tension (32) est interconnectée avec la borne positive (PIN 010) de la ligne d'alimentation et avec la borne arrêt-marche (start-stop) (PIN 014) du générateur de code (8) en passant par une résistance Pull up (9), et par la deuxième ligne (29) elle est liée avec la borne arrêt-marche (start-stop) (PIN 014) du générateur de code (8), et
k) des bornes externes de raccord d'un oscillateur (PIN 012 et 013) du générateur de code (8) sont interconnectées par une résistance externe d'oscillateur (10), et où
l) un bloc de commutation à démodulation (22), se trouvant en amont des utilisateurs électriques (28, 28a), incluant un bloc d'alimentation électrique (23) pour maintenir un courant minimal, afin d'assurer la fonction Stand by (en attente, prêt), interconnecté avec le conducteur neutre (26a) et la deuxième phase modulable (26c) sur la deuxième borne (B) du bloc de commutation à modulation (21), et où
m) à l'intérieur du bloc de commutation à démodulation (22), il y a en aval du bloc d'alimentation électrique (23) un décodeur électronique (24) sous forme d'un microprocesseur, qui est aussi directement interconnecté avec le conducteur neutre (26a) et avec la deuxième phase modulable (26c) par un filtre passe-haut (25) et/ou par un dispositif de reconnaissance de "passage zéro" (30) avec le bloc de commutation à modulation (21), en utilisant sa borne (B), et
n) il y a en aval du décodeur (24) au moins un disjoncteur électronique ou électromécanique (27, 27a), qui est, pour sa part, directement interconnecté en parallèle avec le conducteur neutre (26a) et la deuxième phase modulable (26c), où par les bornes (E, F et/ou G, H) le disjoncteur (27, 27a) est lié avec les utilisateurs électriques finaux (28, 28a).

2. Circuit électrique selon les revendications du point 1., **caractérisé par le fait que** plusieurs blocs de commutation à modulation (21) sont interconnectés en série.
